# EUROPEAN PATENT SPECIFICATION

(11) **EP 0 927 519 B1**
(45) Date of publication and mention of the grant of the patent: **29.10.2003**
(21) Application number: 97204121.4
(22) Date of filing: 29.12.1997
(51) Int. Cl.: A23L 1/00, A23L 1/16

(54) **Noodle product of the beehoon type**
Beehoon-Typ Nudeln
Nouilles de type beehon

(43) Date of publication of application: 07.07.1999
(73) Proprietor: Société des Produits Nestlé S.A., 1800 Vevey (CH)
(72) Inventor: Meyer, Philipp, Paul, CH-8121 Benglen (CH); Scoville, Eugene, New Milford, CO 06776 (US); Jaelminger, Göran, S-25661 Helsingborg (SV)
(74) Representative: Wavre, Claude-Alain

(56) References cited:
- EP-A- 0 105 100
- EP-A- 0 336 080
- EP-A- 0 450 310
- EP-A- 0 531 743
- EP-A- 0 602 953
- WO-A-86/01683
- FR-A- 2 502 907
- US-A- 4 844 936
- US-A- 5 211 977
- US-A- 5 332 587

## Description

The present invention relates to a process for manufacturing a noodle product.

The present invention especially relates to a starchy plant noodle product of the Beehoon type. Rice noodles known in South East Asia under the name of "Beehoon" are traditionally produced domestically or at small-scale by processes based on a small number of basic operations including soaking the grains of rice, wet milling, pre- and post-gelatinisation, cooling and mechanical working of the dough, which are linked and/or repeated in order to confer to the rice dough the cohesion which it lacks. Beehoon have an elastic texture but a cohesion comparable with that of traditional noodles based on wheat.

US4544563 (Lechthaler) discloses a process for the production of starchy plant noodles of the Beehoon type in which a mixture or dough is prepared having a water content of from 35 to 55% and comprising a flour or semolina of the starchy plant and an ionic gelling agent, noodles are formed by cooking-extrusion of the mixture, the noodles are immediately brought into contact with water containing a cation which forms a gel with the ionic gelling agent, and they are dried.

An object of the present invention is to provide a process for manufacturing a full moisture shelf stable noodle product of the Beehoon type which is not intended to be actually cooked at the consumer's end but, on the contrary, is intended to be consumed after unpacking and simply heating up or very short cooking.

The process for manufacturing a full moisture shelf stable noodle product according to the present invention consists of preparing a mixture or dough having a dry matter content of from 45 to 65% by weight and comprising a flour or semolina of a starchy plant, softened water, a starch, an emulsifier and an ionic gelling agent, forming the noodle product by cooking-extrusion of the mixture, immediately bringing the noodle product into contact with water containing a cation which forms a gel with the ionic gelling agent, dewatering the noodle product, cutting and portioning it, water cooling it, dipping it into an acidified water, oiling it, packaging it and in pack pasteurising it, in which the dewatered noodle product is heat treated before being water cooled and dipped into an acidified water, and
in which heat treating is carried out for 30 to 90 s by water boiling, steam blanching and/or passing under a hot water shower.

In the present disclosure, the expression "noodle product of the Beehoon type" means a noodle product which has the texture of traditionally made Beehoon noodles, namely an elastic texture but a cohesion comparable with that of traditional noodles based on wheat.

The noodle product according to the present invention preferably has a circular or oblong cross section from 0.5 to 3 mm in diameter or width.

The present noodle product comprises, in parts by weight on dry matter, from 70 to 100 parts of cooked flour or semolina of a starchy plant, from 5 to 30 parts of cooked starch, from 0.2 to 1.5 parts of ionic gelling agent, from 0.5 to 5 parts of emulsifier and from 0.5 to 5 parts of oil.

In the present noodle product the starchy plant may be cereal grains such as rice or maize, legumes such as soya, or tubers rich in starch such as potato or yam, for example.

The starch preferably is maize starch, potato starch or tapioca starch.

The ionic gelling agent preferably is an acid polysaccharide, especially an alginate, the cation preferably is an alkaline earth metal ion, especially the divalent calcium ion, the emulsifier preferably is a monoglyceride or a mixture of monoglycerides, the acid may be any food grade acid, especially lactic acid or phosphoric acid, and the oil preferably is a vegetable oil, especially peanut oil, rapeseed oil, sunflower oil or palm olein.

The present noodle product may further comprise from 0.2 to 2 parts of hydrocolloid such as guar gum, xanthan gum or carob bean flour, and from 0.5 to 5 parts of proteins such as wheat proteins, which may be very useful in improving the stability and/or the integrity of the noodle product, for example.

To implement the present process, soft water is used which preferably has a calcium ion concentration of less than 4.10⁻⁴ moles/l and a temperature of from 10-90°C, especially a temperature of from 60 to 80°C.

A mixture is prepared which, beside soft water, preferably comprises, in parts by weight, from 70 to 100 parts of flour or semolina of a starchy plant, from 5 to 30 parts of starch, from 0.2 to 1.5 parts of ionic gelling agent and from 0.5 to 5 parts of emulsifier.

The flour or semolina of a starchy plant may be a rice or maize flour or semolina, or a soya, potato or yam flour, for example.

Cooking-extrusion of the mixture preferably is carried out under from 70 to 100 bar, at from 60 to 120°C and for 20 to 120 s.

Extrusion preferably is carried out through a die with holes of circular or oblong cross section from 0.5 to 3 mm in diameter or width.

The temperature of the noodle product preferably is adjusted during cooking-extrusion so that it is from about 100 to 110°C on discharge from the die.

The extruded noodle product preferably is brought into contact for 2 to 30 s with a water containing the cation at a concentration of from 0.05 to 0.2 moles/l and having a temperature of from 60 to 70°C.

Dewatering may be carried out by blowing air on the noodle product in order to remove water containing the cation which remained on the surface of the noodle product.

The step of cutting and portioning may in fact be carried out at any stage after the dewatering step and before the packaging step.

The dewatered and water cooled noodle product preferably is dipped into an acidified water containing from 0.5 to 1.5% acid, especially lactic and/or phosphoric acid, at ambient temperature, especially at from 18 to 35°C, and for from 60 to 150 s.

After this acidifying step excessive water is preferably drained off.

Then the oiling step is carried out so that the noodle product preferably is covered with from 0.5 to 5% oil with or without adequate emulsifier.

The oiled noodle product preferably is packed in a flexible pouch with a controlled volume of head space.

Eventually the packaged noodle product preferably is in pack pasteurised at from 80 to 100°C, for from 1 to 80 min.

After having been dewatered, the noodle product is heat treated for about 30 to 90 s, by water boiling, steam blanching and/or passing under a hot water shower, before being water cooled and dipped into an acidified water.

Surprisingly this heating step notably helps in creating the required texture during processing as the present food product is not intended to be actually cooked again at the consumer's end but only heated up or very shortly cooked after unpacking.

Heating up or very shortly cooking the present food product after unpacking may be carried out in a pan, in a microwave oven, or by pouring hot or boiling water onto it, for example.

In a further embodiment of the present process, the steps consisting of dipping the noodle product into an acidified water, oiling it, packaging it and in pack pasteurising it are replaced by steps consisting of directly oiling the noodle product, packaging it and freezing it.

The corresponding further embodiment of the present product does not comprise an acid but is frozen instead. This embodiment of the present product may be thawed before unpacking or afterwards, especially during heating up or very shortly cooking, for example.

The present process may be implemented by means of normal equipment such as cooking-extruder, steeping unit, dewatering unit, optional steam blancher, water bath and/or showers from the edible dough industry, for example.

As cooking-extruder, a twin screw extruder may be used which has a casing divided into successive double walled sectors the respective temperatures of which may be adjusted by circulating fluids at appropriate temperatures, for example.

Such an extruder may be provided with an extrusion die consisting of a thick steel plate with holes of circular or oblong cross section from 0.5 to 3 mm in diameter or width, for example.

The product and the process according to the present invention are further disclosed in more details in the following Examples in which the percentages and parts are by weight.

### Example 1

75 parts of round-grain rice flour (Oryza sativa japonica) having a moisture content of from 12 to 14%, 20 parts of potato starch, 0.8 part of monoglycerides of vegetable origin, 0.2 part of guar gum flour, 1 part of sodium alginate and 3 parts of wheat proteins were dry premixed.

A mixture was prepared by feeding 100 parts of the dry premix and 61 parts of softened water containing about 2.10⁻⁴ moles of divalent calcium per litre into a C 58 type Werner & Pfleiderer twin screw extruder in which it was cooked-extruded at about 100°C under about 95 bar for about 90 s.

The temperature of the cooked mixture was adjusted at the end of the extruder in order that it was between 100 and 105°C on discharge of the die.

The die consisted of a thick steel plate with 36 holes of circular cross section 0.9 mm in diameter.

The extruded noodle product was immediatly immersed in and drawn continuously for 10 s through a bath of water having a temperature of 60°C and containing 0.16 moles of divalent calcium ions per liter, in the form of CaCl2 or CaCO3.

The noodle product was then dewatered, cut into length of about 400 to 420 mm and portioned into baskets about 90 to 120 g in weight.

The portioned noodle product was steam blanched for 60 s with saturated steam at atmospheric pressure and shortly passed under a hot water shower.

The steam blanched noodle product was cooled by dipping for 15 to 45 s into a bath of water having a temperature of 20 to 30°C.

The cooled noodle product was dipped for about 100 s into a bath of acidified water containing 1.0% of lactic acid and having a pH of 2.8.

Excessive water was drained off.

The acidified noodle product was then oiled with palm olein containing a few percents of monoglycerides of vegetable origin, so that it was covered with a homogeneous oil film representing about 1% of its weight.

The oiled noodle product, which was already portioned, was packaged into plastic pouches and sealed, the pouches being 165 mm x 145 mm and having about 30 to 50 ml air as headspace.

The packaged noodle product was in pack pasteurised in hot air or water for about 35 to 50 min at about 85 to 90°C.

The in pack pasteurised noodle product was cooled in tap water (treated with sanitizer) for 15 min or in chilled air for 40 min.

The rice noodle product thus obtained had a pH of between about 3.9 to 4.1 and a water content of between about 65 to 70%. Its temperature was about room temperature.

The rice noodle product could be prepared for consumption by unpacking and heating up.

The rice noodle product did not stick together and had a smooth surface and texture.

The rice noodle product had an elastic texture but a cohesion comparable with that of traditional noodles based on wheat, as have the traditional rice noodles known by the name of Beehoon.

### Example 2

70 parts of maize flour, 15 parts of potato starch, 10 parts of maize starch, 0.8 part of monoglycerides of vegetable origin, 0.2 part of guar gum flour, 0.7 part of sodium alginate and 3 parts of wheat proteins were dry premixed.

A mixture was prepared by feeding 100 parts of the dry premix and 56 parts of softened water containing about 2.10 ⁻⁴ moles of divalent calcium per litre into a C 58 type Werner & Pfleiderer twin screw extruder in which it was cooked-extruded at about 100°C under about 95 bar for about 90 s.

The temperature of the cooked mixture was adjusted at the end of the extruder in order that it was between 100 and 110°C on discharge of the die.

The die consisted of a thick steel plate with 36 holes of circular cross section 0.9 mm in diameter.

The next steps of the process were carried out in the same way as disclosed in Example 1.

The in pack pasteurised maize noodle product thus obtained had a pH of between about 3.9 to 4.1 and a water content of between about 65 to 70%. Its temperature was about room temperature.

The maize noodle product could be prepared for consumption by unpacking and heating up.

The maize noodle product did not stick together and had a smooth surface and texture.

The maize noodle product had an elastic texture but a cohesion comparable with that of traditional noodles based on wheat, as have the traditional rice noodles known by the name of Beehoon.

## Claims

1. A process for manufacturing a full moisture shelf stable noodle product consisting of preparing a mixture having a dry matter content of from 45 to 65% by weight and comprising a flour or semolina of a starchy plant, softened water, a starch, an ionic gelling agent and an emulsifier, forming the noodle product by cooking-extrusion of the mixture, immediately bringing the noodle product into contact with water containing a cation which forms a gel with the ionic gelling agent, dewatering the noodle product, cutting and portioning it, water cooling it, dipping it into an acidified water, oiling it, packaging it and in pack pasteurising it, in which the dewatered noodle product is heat treated before being water cooled and dipped into an acidified water, and
in which heat treating is carried out for 30 to 90 s by water boiling, steam blanching and/or passing under a hot water shower.

2. A process according to claim 1, in which cooking-extrusion is carried out under from 70 to 100 bar, at from 60 to 120°C and for 20 to 120 s.

3. A process according to claim 1, in which the noodle product is brought for 2 to 30 s into contact with a water containing the cation at a concentration of from 0.05 to 0.2 moles/l and having a temperature of from 60 to 70°C.

4. A process according to claim 1, in which the water cooled noodle product is dipped into an acidified water containing from 0.5 to 1.5% acid, especially lactic and/or phosphoric acid, at ambient temperature, especially at from 18 to 35°C, for from 60 to 150 s.

5. A process according to claim 1, in which the packaged noodle product is in pack pasteurised at from 80 to 100°C, for from 1 to 80 min.

## Patentansprüche

1. Verfahren zum Herstellen eines haltbaren Nudelprodukts mit vollständigem Feuchtigkeitsgehalt, das aus dem Zubereiten einer Mischung mit einem Trockenmassegehalt zwischen 45 und 65 Gew.% und umfassend ein Mehl oder einen Gries einer stärkeartigen Pflanze, enthärtetes Wasser, eine Stärke, ein ionisches Geliermittel und einen Emulgator, dem Formen des Nudelprodukts durch Kochextrudieren der Mischung, dem unmittelbaren In-Kontakt-Bringen des Nudelprodukts mit Wasser, das ein Kation enthält, das mit dem ionischen Geliermittel ein Gel bildet, dem Entwässern des Nudelprodukts, dem Schneiden und dem Portionieren desselben, dem Kühlen desselben mit Wasser, dem Tauchen desselben in ein saures Wasser, dem Ölen desselben, dem Verpacken desselben und dem Pasteurisieren desselben in der Verpackung,
wobei das entwässerte Nudelprodukt wärmebehandelt wird, bevor es mit Wasser gekühlt und in ein saures Wasser getaucht wird, und
wobei die Wärmebehandlung für 30 bis 90 s ausgeführt wird, indem es in Wasser gekocht wird, mit Dampf blanchiert wird und/oder unter einer Heißwasserdusche geleitet wird.

2. Prozess nach Anspruch 1, bei dem das Kochextrudieren zwischen 70 und 100 Bar bei 60 bis 120 °C und für 20 bis 120 s durchgeführt wird.

3. Verfahren nach Anspruch 1, bei dem das Nudelprodukt für 2 bis 30 s in Kontakt mit einem Wasser gebracht wird, das ein Kation enthält, bei einer Konzentration zwischen 0,05 und 0,2 mol/l und mit einer Temperatur von 60 bis 70 °C.

4. Verfahren nach Anspruch 1, bei dem das mit Wasser gekühlte Nudelprodukt in ein saures Wasser das zwischen 0,5 und 1,5 % Säure enthält, insbesondere Milch- und/oder Phosphorsäure, bei Umgebungstemperatur, insbesondere zwischen 18 und 35 °C für 60 bis 150 s getaucht wird.

5. Verfahren nach Anspruch 1, bei dem das verpackte Nudelprodukt in der Packung bei 80 bis 100 °C für 1 bis 80 Min. pasteurisiert wird.

## Revendications

1. Procédé pour la production d'un produit consistant en nouilles à humidité maximale et stable à la conservation, consistant à préparer un mélange ayant une teneur en matière sèche de 45 à 65 % en poids et comprenant une farine ou semoule d'une plante amylacée, de l'eau adoucie, un amidon, un agent gélifiant ionique, un émulsionnant, à former le produit consistant en nouilles par cuisson-extrusion du mélange, à mettre immédiatement le produit consistant en nouilles, en contact avec de l'eau contenant un cation qui forme un gel avec l'agent gélifiant ionique, à égoutter le produit consistant en nouilles, à le couper et à le diviser en portions, à le refroidir par de l'eau, à le plonger dans une eau acidifiée, à l'huiler, à l'emballer et à le pasteuriser dans l'emballage, dans lequel le produit consistant en nouilles égouttées est soumis à un traitement thermique avant d'être refroidi par eau et plongé dans une eau acidifiée, et dans lequel le traitement thermique est effectué pendant 30 à 90 secondes par de l'eau bouillante, un blanchiment à la vapeur et/ou un passage sous des jets d'eau chaude.

2. Procédé suivant la revendication 1, dans lequel la cuisson-extrusion est effectuée sous une pression de 70 à 100 bars à une température de 60 à 120°C pendant un temps de 20 à 120 secondes.

3. Procédé suivant la revendication 1, dans lequel le produit consistant en nouilles est mis pendant 2 à 30 secondes en contact avec une eau contenant le cation à une concentration de 0,05 à 0,2 mole/litre et ayant une température de 60 à 70°C.

4. Procédé suivant la revendication 1, dans lequel le produit consistant en nouilles refroidies par eau est plongé dans une eau acidifiée contenant 0,5 à 1,5 % d'un acide, notamment d'acide lactique et/ou phosphorique, à température ambiante, notamment à une température de 18 à 35°C, pendant un temps de 60 à 150 secondes.

5. Procédé suivant la revendication 1, dans lequel le produit consistant en nouilles emballées est pasteurisé dans l'emballage à une température de 80 à 100°C pendant un temps de 1 à 80 minutes.
